# EUROPÄISCHE PATENTSCHRIFT

(11) **EP 2 018 495 B1**
(45) Veröffentlichungstag und Bekanntmachung des Hinweises auf die Patenterteilung: **01.08.2012**
(21) Anmeldenummer: 07724596.7
(22) Anmeldetag: 26.04.2007
(51) Int. Cl.: F16H 57/04, F16H 55/08, F16N 13/20, F04C 15/00, F04C 2/08

(54) **SCHMIEREINRICHTUNG MIT SCHMIERRITZEL**
LUBRICATING DEVICE WITH LUBRICATING PINION
DISPOSITIF DE LUBRIFICATION AVEC PIGNON DE LUBRIFICATION

(30) Priorität: 16.05.2006 DE 202006007831 U; 20.07.2006 DE 202006011330 U
(43) Veröffentlichungstag der Anmeldung: 28.01.2009
(73) Patentinhaber: Lincoln GmbH, 69190 Walldorf (DE)
(72) Erfinder: PALUNCIC, Zdravko, 67067 Ludwigshafen (DE); SCHÖNFELD, Andreas, 68789 St. Leon-Rot (DE)
(74) Vertreter: KEIL & SCHAAFHAUSEN Patentanwälte
(86) Internationale Anmeldenummer: PCT/EP2007/003666
(87) Internationale Veröffentlichungsnummer: WO 2007/131604

(56) Entgegenhaltungen:
- DE-U1- 20 121 923
- DE-U1-202007 004 103
- GB-A- 1 209 792

## Beschreibung

Die Erfindung betrifft ein Getriebe mit den Merkmalen des Oberbegriffs des Anspruchs 1, wie es aus GB 1209792 bekannt ist.

Eine derartige Einrichtung zum Abschmieren von Zahnrädern ist beispielsweise aus der DE 201 21 923 U1 bekannt. Das dort als Zahnkranzmodul bezeichnete Schmierritzel hat die Außenkontur eines herkömmlichen Zahnrads mit Evolventenverzahnung. Wenn dieses bekannte Schmierritzel mit einem zu schmierenden Zahnrad kämmt, greift der radial außerhalb des Teilkreises gelegene Kopfbereich der Zähne des Schmierritzels in den radial innerhalb des Teilkreises gelegenen Fußbereich der Zähne des zu schmierenden Zahnrads ein. Dies bewirkt, dass der Schmierstoff unregelmäßig und ungleichmäßig auf das zu schmierende Zahnrad aufgetragen wird und sich insbesondere im Bereich des Zahnfußes des zu schmierenden Zahnrads ansammelt. Darüber hinaus kommt es teilweise zu einer unzureichenden Schmierstoffversorgung im Bereich der tribologisch hoch beanspruchten und miteinander im Kontakt stehenden Zahnflanken.

Aufgabe der vorliegenden Erfindung ist es demgegenüber, eine Schmiereinrichtung der eingangs genannten Art bereitzustellen, mit welcher eine verbesserte Verteilung des Schmiermittels an einem zu schmierenden Zahnrad bei gleichzeitig möglichst einfachem Aufbau der Schmiereinrichtung erreicht wird.

Diese Aufgabe wird erfindungsgemäß durch ein Getriebe mit den Merkmalen nach Anspruch 1 gelöst. Für die verringerte Kopfhöhe wird die bisher vorhandene Zahnspitze abgenommen. Die Kopfhöhe errechnet sich dabei aus der Hälfte der Differenz des Außendurchmessers des Schmierritzels und des Teilkreisdurchmessers des Schmierritzels. Mit anderen Worten bezeichnet die Kopfhöhe die Höhe des über den Teilkreis radial nach außen hervorstehenden Bereichs eines jeden Zahnes.

Bei einer Evolventenverzahnung ist dies in der Regel ein spitz zulaufender Zahnbereich. Wenn nun diese Kopfhöhe gegenüber der Kopfhöhe des theoretischen Profils der Evolventenverzahnung des Schmierritzels verringert wird, dringen die Zähne des Schmierritzels weniger tief in den Fußbereich des zu schmierenden Zahnrads ein. Überraschend hat sich herausgestellt, dass hierdurch eine erheblich bessere Verteilung des Schmiermittels in den tribologisch stärker beanspruchten Bereichen erreicht wird und insbesondere eine ungewollte Ansammlung des Schmiermittels im Fußbereich des zu schmierenden Zahnrads vermieden wird. Gleiches gilt für eine Verringerung der Breite der Zahnflanken in Umfangsrichtung in einem radial außerhalb des Teilkreises gelegenen Zahnflankenabschnitt, wodurch sich ebenfalls vermeiden lässt, dass der Schmierstoff unregelmäßig und ungleichmäßig auf das zu schmierende Zahnrad aufgetragen wird und sich insbesondere im Bereich des Zahnfußes des zu schmierenden Zahnrads ansammelt.

Vorzugsweise ist die Kopfhöhe der Zähne der Außenverzahnung des Schmierritzels gegenüber dem theoritischen Profil des Evolventenverzahnung um etwa 25% bis etwa 90%, insbesondere um etwa 50% bis etwa 80% verringert. Als besonders günstig hat es sich herausgestellt, wenn die Zähne der Außenverzahnung des Schmierritzels eine gegenüber dem theoritischen Profil des Evolventenverzahnung um etwa 75% verringerte Kopfhöhe aufweisen. Mit anderen Worten beträgt die Kopfhöhe nur noch etwa 25% des theoretischen Profils bei der Evolventenverzahnung. Die Verkürzung der Zähne des Schmierritzels erfolgt dabei nur in dem radial außerhalb des Teilkreises liegenden Bereich, da bei einer Verkürzung der Zähne bis auf einen unterhalb des Teilkreises liegenden Wert das Schmierritzel nicht mehr von dem zu schmierenden Zahnrad mitgenommen würde.

Es ist auch möglich, dass die Zähne der Außenverzahnung des Schmierritzels eine gegenüber dem theoretischen Profil der Evolventenverzahnung um etwa 25% bis 50% verringerte Zahnhöhe aufweisen, insbesondere kann die Außenverzahnung eine um etwa 25% verringerte Kopfhöhe aufweisen.

Das erfindungsgemäß korrigierte Profil mit einer verringerten Kopfhöhe kann auch in der Kontur der Außenverzahnung gegenüber dem theoretischen Profil der Evolventenverzahnung verändert sein. So können die Zähne der Außenverzahnung des Schmierritzels eine abgerundete Zahnkopfkontur aufweisen. Dies kann beispielsweise durch einen größeren Radius im Bereich der Zahnkopfspitze erfolgen, der seitlich jeweils in kleinere Radien übergeht. Die Zähne der Außenverzahnung des Schmierritzels können dabei eine derart abgerundete Zahnkopfkontur aufweisen, dass die Breite der Zahnflanken in Umfangsrichtung in einem radial außerhalb des Teilkreises gelegenen Zahnflankenabschnitt gegenüber dem theoretischen Profil der Evolventenverzahnung verringert ist.

Alternativ hierzu ist es jedoch auch möglich, eine beliebige andere Zahnkopfkontur der Zähne der Außenverzahnung des Schmierritzels vorzusehen. So kann die Zahnkopfkontur auch spitz ausgebildet sein.

Um eine gleichmäßige und gute Versorgung des zu schmierenden Zahnrads mit einem Schmierstoff zu ermöglichen, weist das Schmierritzel vorzugsweise mehrere von einer Schmierstoffzuleitung ausgehende Schmierstoffleitungen auf, die jeweils in wenigstens einen Schmierstoffauslass in einem der Zähne mündet. Die Schmierstoffzufuhrleitung, die über eine Schmierstoffpumpe mit einem Vorratsbehälter verbunden sein kann, ist nach einer bevorzugten Ausführungsform der Erfindung im Bereich der Achse des Schmierritzels oder in einem achsnahen Bereich des Schmierritzels angeordnet.

In Weiterbildung dieses Erfindungsgedankens ist es vorgesehen, dass in jeden Zahn des Schmierritzels wenigstens zwei Schmierstoffauslässe münden. Hierdurch wird erreicht, dass jeder Zahn des zu schmierenden Zahnrads mit Schmierstoff versorgt wird.

Um beide Zahnflanken jedes Zahnes des zu schmierenden Zahnrads mit Schmierstoff zu versorgen, ist nach einer weiteren Ausführungsform der Erfindung in jeder Zahnflanke des Schmierritzels wenigstens ein Schmierstoffauslass vorgesehen.

Das Schmierritzel selbst kann zumindest teilweise aus Metall bestehen oder zumindest teilweise aus Kunststoff gefertigt sein. Es ist auch möglich, dass das Schmierritzel und das zu schmierende Zahnrad aus unterschiedlichen Werkstoffen bestehen.

Wenn dabei die Auslassöffnungen des Schmierritzels im Bereich des Teilkreises und/oder in einem Bereich zwischen dem Teilkreis und dem Fußkreis in die Zahnflanken münden, wird das zu schmierende Zahnrad an den tribologisch höchst beanspruchten Stellen abgeschmiert.

Vorzugsweise münden die Auslassöffnungen in den Zahnflanken in Quernuten bzw. Kanäle, welche in axialer Richtung des Schmierritzels verlaufen und sich über fast die gesamte axiale Breite der Zahnflanken erstrecken. Hierdurch wird eine Verteilung des Schmierstoffes im Wesentlichen über die gesamte Breite des Schmierritzels sowie des zu schmierenden Zahnrades erreicht.

Die vorliegende Erfindung ist dabei nicht auf die Abschmierung eines als Stirnrad ausgebildeten Zahnrads beschränkt, sondern kann auch bei Kegelrädern, Schraubenrädern, Kronrädern, Schnecken, Zahnstangen oder elliptischen Zahnrädern eingesetzt werden, die dann mit dem Schmierritzel kämmen.

Die Erfindung wird nachfolgend anhand eines Ausführungsbeispiels und unter Bezugnahme auf die Zeichnung näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Fig. 1: ausschnittsweise ein erfindungsgemäßes Schmierritzel, welches mit einem zu schmierenden Zahnrad in Eingriff steht,
- Fig. 2: das mit dem zu schmierenden Zahnrad in Eingriff stehende Schmierritzel in einer gegenüber Figur 1 weiter gedrehten Stellung,
- Fig. 3: in Perspektivansicht das Schmierritzel nach Figur 1 und
- Fig. 4: ausschnittsweise ein erfindungsgemäßes Schmierritzel.

In den Figuren ist ausschnittsweise ein Schmierritzel 1 einer Schmiereinrichtung dargestellt, welches einen Teilkreisdurchmesser d aufweist. Das Schmierritzel 1 kämmt mit einem ebenfalls nur ausschnittsweise dargestellten zu schmierenden Zahnrad 2, welches eine Evolventenverzahnung aufweist.

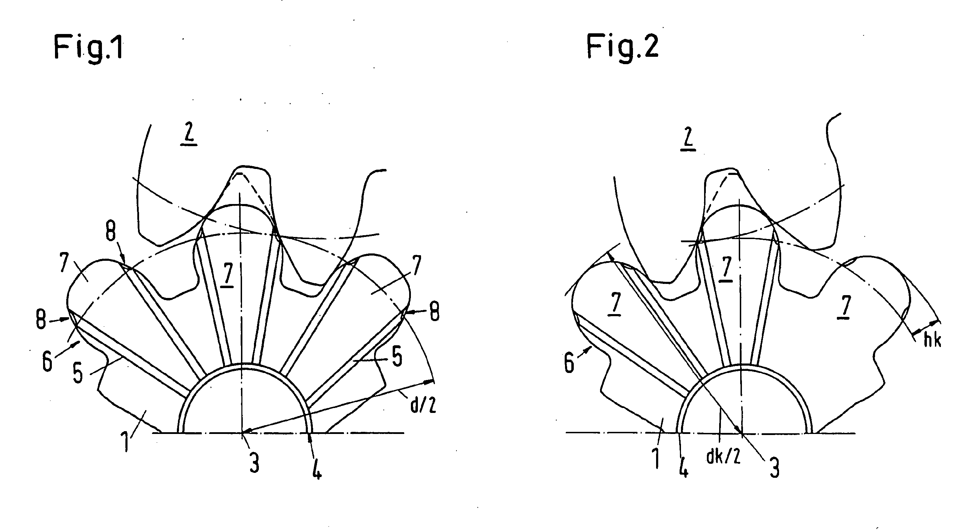

Im Bereich der Achse 3 des Schmierritzels 1 ist eine Schmierstoffzufuhrleitung 4 ausgebildet, von welcher im Wesentlichen in radialer Richtung Schmierstoffleitungen 5 ausgehen, welche in den Zahnflanken 6 der Zähne 7 des Schmierritzels 1 in jeweils einen Schmierstoffauslass 8 münden. Wie aus der Darstellung der Figur 1 ersichtlich ist, liegen die Schmierstoffauslässe 8 im Wesentlichen im Bereich des Teilkreises. In der Darstellung der Figur 1 berührt der in der rechten Zahnflanke angeordnete Schmierstoffauslass des Schmierritzels 1 das zu schmierende Zahnrad 2, während das Schmierritzel 1 in der Darstellung der Figur 2 im Uhrzeigersinn weitergedreht wurde, so dass der in der linken Zahnflanke gelegene Schmierstoffauslass 8 des Schmierritzels 1 das zu schmierende Zahnrad 2 berührt.

Die Zahnkopfkontur des Schmierritzels 1 ist in den Figuren in durchgezogenen Linien dargstellt. Der in den Figuren mittlere Zahn des Schmierritzels 1 zeigt in unterbrochener Linie die Zahnkopfkontur des Schmierritzels bei einem theoretischen Profil einer Evolventenverzahnung. Wie aus dem Vergleich der durchgezogenen Linie und der unterbrochenen Linie ersichtlich ist, ist die Zahnkopfkontur sowie die Zahnhöhe bei dem Schmierritzel 1 gegenüber dem theoretischen Profil einer Evolventenverzahnung verändert.

So ist die Kopfhöhe hk der Zähne 7 des Schmierritzels 1 gegenüber dem theoretischen Profil einer Evolventenverzahnung verringert. Die Kopfhöhe hk ist dabei als die Hälfte der Differenz des Außendurchmessers dk des Schmierritzels 1 und des Teilkreisdurchmessers d des Schmierritzels 1 definiert. In der dargestellten Ausführungsform entspricht die Kopfhöhe der Zähne 7 des Schmierritzels 1 nur einem Wert von etwa 0,2 bis etwa 0,7 der Kopfhöhe bei dem theoretischen Profil einer Evolventenverzahnung. Die Zähne 7 des Schmierritzels 1 dringen daher nur sehr viel geringer in den Fußbereich zwischen den Zähnen des zu schmierenden Zahnrads 2 ein.

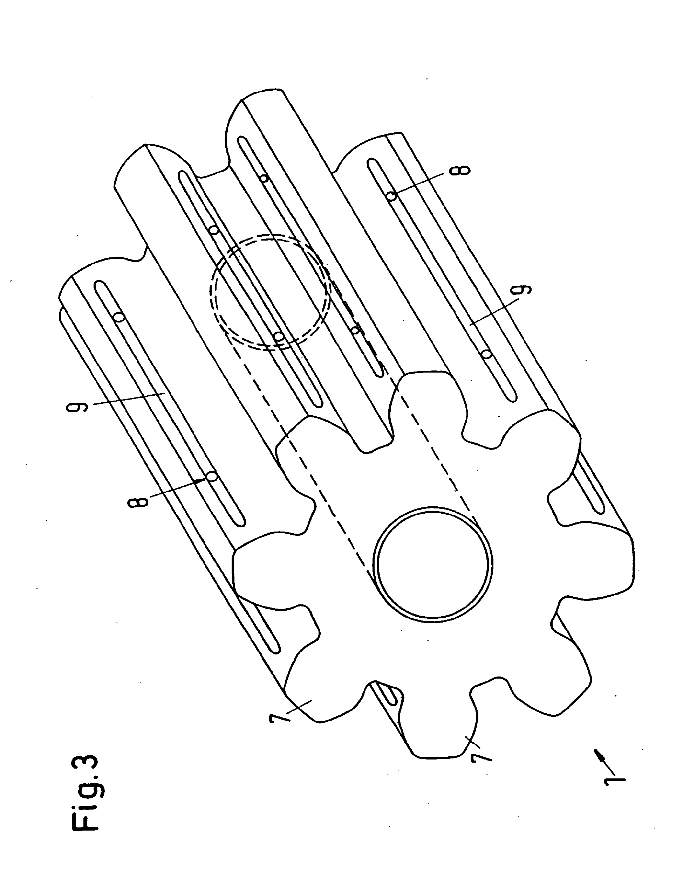

Weiter ist auch die Zahnkopfkontur der Zähne 7 des Schmierritzels 1 gegenüber einer meist spitz zulaufenden Evolventenverzahnung in eine in der dargestellten Ausführungsform abgerundete Zahnkopfkontur verändert. Auch dies bewirkt, dass im Wesentlichen im Bereich des Teilkreises an die Zahnflanken des zu schmierenden Zahnrads 2 abgegeben wird, ohne sich im Fußbereich des zu schmierenden Zahnrads 2 anzusammeln. Der aus den Schmierstoffauslässen 8 abgegebene Schmierstoff mündet in axiale Kanäle 9 bzw. Quernuten, die in Figur 3 gezeigt sind, um den Schmierstoff über die Breite des Schmierritzels 1 zu verteilen.

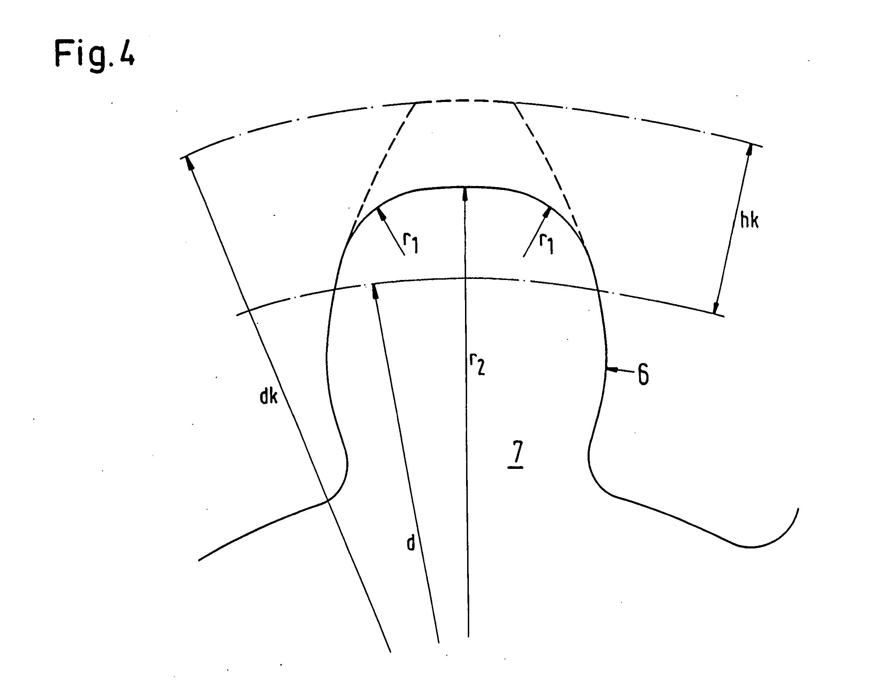

Wie insbesondere aus Figur 4 ersichtlich ist, wird die Zahnkopfkontur der Zähne 7 des Schmierritzels 1 in der dargestellten Ausführungsform durch einen größeren mittleren Radius r₂, welcher auf jeder Seite in einen kleineren Radius r₁ übergeht, gebildet. Die Breite der Zahnflanken in Umfangsrichtung ist dabei nur in einem radial außerhalb des Teilkreises gelegenen Zahnflankenabschnitt verringert. Dieses gegenüber dem gestrichelt dargestellten theoretischen Profil sowohl in der Kopfhöhe als auch in der Breite der Zahnflanken in Umfangsrichtung korrigierte Profil der Zähne 7 des Schmierritzels 1 bewirkt, dass das Abtragen des Schmierstoffes, beispielsweise Schmierfett, verhindert wird, so dass im Wesentlichen die Zahnflanken des zu schmierenden Zahnrads 2 mit Schmierstoff versorgt werden.

### Bezugszeichenliste:

- 1: Schmierritzel
- 2: zu schmierendes Zahnrad
- 3: Achse
- 4: Schmierstoffzufuhrleitung
- 5: Schmierstoffleitung
- 6: Zahnflanke
- 7: Zahn
- 8: Schmierstoffauslass
- 9: Kanal

- d: Teilkreisdurchmesser
- dk: Außendurchmesser
- hk: Kopfhöhe
- r₁: kleinerer Radius
- r₂: größerer Radius

## Patentansprüche

1. Getriebe mit wenigstens einem Zahnrad (2) oder dgl., welches eine Evolventenverzahnung aufweist, und mit einer Schmiereinrichtung mit wenigstens einem Schmierritzel (1) zum Aufbringen eines bspw. durch eine Schmierstoffleitung von einer Schmierstoffpumpe aus einem Vorratsbehälter geförderten Schmierstoffes, insbesondere Fett, auf wenigstens ein Zahnrad (2) oder dgl., wobei das Schmierritzel (1) eine Außenverzahnung aufweist, in welche wenigstens ein Schmierstoffauslass (8) mündet, wobei das Schmierritzel (1) der Schmiereinrichtung mit dem wenigstens einen Zahnrad (2) kämmt, und wobei das Schmierritzel eine Evolventenverzahnung aufweist, **dadurch gekennzeichnet, dass** die Zähne (7) der Außenverzahnung des Schmierritzels (1) ein gegenüber dem theoretischen Profil der Evolventenverzahnung des Schmierritzels (1) gekürztes Zahnflankenprofil aufweisen, wobei die Kopfhöhe (hk) und/oder die Breite der Zahnflanken in Umfangsrichtung in einem radial außerhalb des Teilkreises gelegenen Zahnflankenabschnitt verringert sind, so dass die Zähne des Schmierritzels (1) weniger tief in den Fußbereich des zu Schmierenden Zahnrads (2) eindringen.

2. Getriebe nach Anspruch 1, **dadurch gekennzeichnet, dass** die Zähne (7) der Außenverzahnung des Schmierritzels (1) eine gegenüber dem theoretischen Profil der Evolventenverzahnung des Schmierritzels (1) um etwa 25% bis etwa 90%, insbesondere um etwa 50% bis etwa 80% verringerte Kopfhöhe (hk) aufweisen.

3. Getriebe nach Anspruch 2, **dadurch gekennzeichnet, dass** die Zähne (7) der Außenverzahnung des Schmierritzels (1) einen gegenüber dem theoretischen Profil der Evolventenverzahnung des Schmierritzels (1) um etwa 75% verringerte Kopfhöhe (hk) aufweisen.

4. Getriebe nach einem der Ansprüche 1 bis 3, **dadurch gekennzeichnet, dass** die Zähne (7) der Außenverzahnung des Schmierritzels (1) eine abgerundete, insbesondere eine mit drei Radien (r₁ ,r₂) abgerundete Zahnkopfkontur aufweisen.

5. Getriebe nach Anspruch 4, **dadurch gekennzeichnet, dass** die Zähne der Außenverzahnung des Schmierritzels (1) eine abgerundete Zahnkopfkontur aufweisen, welche einen größeren Radius (r₂) im Bereich der Zahnkopfspitze hat, der seitlich jeweils in kleinere Radien (r₁) übergeht.

6. Getriebe nach einem der Ansprüche 1 bis 4, **dadurch gekennzeichnet, dass** die Zähne (7) der Außenverzahnung des Schmierritzels (1) eine derart abgerundete Zahnkopfkontur aufweisen, dass die Breite der Zahnflanken in Umfangsrichtung in einem radial außerhalb des Teilkreises gelegenen Zahnflankenabschnitt gegenüber einer Evolventenverzahnung verringert ist.

7. Getriebe nach einem der Ansprüche 1 bis 4 und 6, **dadurch gekennzeichnet, dass** die Zähne (7) der Außenverzahnung des Schmierritzels (1) eine spitze Zahnkopfkontur aufweisen.

8. Getriebe nach einem der Ansprüche 1 bis 4 und 6 bis 7, **dadurch gekennzeichnet, dass** das Schmierritzel (1) mehrere von einer in dessen Achse (3) oder in dessen achsnahem Bereich angeordneten Schmierstoffzufuhrleitung (4) ausgehende Schmierstoffleitungeri (5) aufweist, die jeweils in wenigstens einen Schmierstoffauslass (8) in einem der Zähne (7) münden.

9. Getriebe nach einem der Ansprüche 1 bis 4 und 6 bis 8, **dadurch gekennzeichnet, dass** in jeden Zahn (7) des Schmierritzels (1) wenigstens zwei Schmierstoffauslässe (8) münden.

10. Getriebe nach Anspruch 9, **dadurch gekennzeichnet, dass** die Schmierstoffauslässe (8) durch eine Quernut oder einen Kanal (9), welcher in axialer Richtung des Schmierritzels (1) über insbesondere fast die gesamte Breite der Zahnflanken (6) verläuft, verbunden sind.

11. Getriebe nach Anspruch 9 oder 10, **dadurch gekennzeichnet, dass** in jede Zahnflanke (6) und/oder Quernut oder Kanal (9) des Schmierritzels (1) wenigstens ein Schmierstoffauslass (8) mündet.

12. Getriebe nach einem der Ansprüche 1 bis 4 und 6 bis 11, **dadurch gekennzeichnet, dass** wenigstens einige der Schmierstoffauslässe (8) im Bereich des Teilkreises (d) und/oder in einem Bereich zwischen dem Teilkreis und dem Fußkreis in die Zahnflanken (6) des Schmierritzels (1) münden.

## Claims

1. A gear unit with at least one gearwheel (2) or the like, having an involute toothing, and with a lubricating device having at least one lubricating pinion (1) for the application of a lubricant, particularly grease, conveyed for example through a lubricant pipeline by a lubricant pump from a storage tank, to at least one gearwheel (2) or the like, in which case the lubricating pinion (1) has an external toothing with at least one lubricant outlet (8) opening into it, the lubricating pinion (1) of the lubricating device meshing with the at least one gearwheel (2) and the lubricating pinion having an involute toothing, **characterized in that** the teeth (7) of the external toothing of the lubricating pinion (1) have a tooth flank profile which is shortened relative to the theoretical profile of the involute toothing of the lubricating pinion (1), the addendum (hk) and/or the width of the tooth flanks being reduced in circumferential direction in a portion of the tooth flank located radially outside of the pitch circle so that the teeth of the lubricating pinion (1) penetrate less deeply into the root region of the gearwheel (2) to be lubricated.

2. A gear unit according to Claim 1, **characterized in that** the teeth (7) of the external toothing of the lubricating pinion (1) have an addendum (hk) which is reduced relative to the theoretical profile of the involute toothing of the lubricating pinion (1) by approximately 25% to approximately 90%, and in particular by approximately 50% to approximately 80%.

3. A gear unit according to Claim 2, **characterized in that** the teeth (7) of the external toothing of the lubricating pinion (1) have an addendum (hk) which is reduced relative to the theoretical profile of the involute toothing of the lubricating pinion (1) by approximately 75%.

4. A gear unit according to one of Claims 1 to 3, **characterized in that** the teeth (7) of the external toothing of the lubricating pinion (1) have a rounded contour of the tooth tip and in particular have a rounded contour with three radii (r₁, r₂).

5. A gear unit according to Claim 4, **characterized in that** the teeth of the external toothing of the lubricating pinion (1) have a rounded contour of the tooth tip with a relatively large radius (r₂) in the region at the top of the tooth, which transitions at each side into smaller radii (r₁).

6. A gear unit according to one of Claims 1 to 4, **characterized in that** the teeth (7) of the external toothing of the lubricating pinion (1) have a rounded contour of the tooth tip such that, in a tooth flank portion located radially outside of the pitch circle, the width of the tooth flanks in circumferential direction is reduced relative to an involute toothing.

7. A gear unit according to one of Claims 1 to 4 and 6, **characterized in that** the teeth (7) of the external toothing of the lubricating pinion (1) have a pointed contour of the tooth tip.

8. A gear unit according to one of Claims 1 to 4 and 6 to 7, **characterized in that** the lubricating pinion (1) has a plurality of lubricant pipelines (5) proceeding from a lubricant feeder line (4) arranged in its axis (3) or in the vicinity of its axis (3), each pipeline (5) opening into at least one lubricant outlet (8) in one of the teeth (7).

9. A gear unit according to one of Claims 1 to 4 and 6 to 8, **characterized in that** at least two lubricant outlets (8) open into each tooth (7) of the lubricating pinion (1).

10. A gear unit according to Claim 9, **characterized in that** the lubricating outlets (8) are connected by a transverse groove or channel (9), which extends in axial direction of the lubricating pinion (1) particularly over almost the full width of the tooth flanks (6).

11. A gear unit according to Claim 9 or 10, **characterized in that** at least one lubricant outlet (8) opens into each tooth flank (6) and/or transverse groove or channel (9) of the lubricating pinion (1).

12. A gear unit according to one of Claims 1 to 4 and 6 to 11, **characterized in that** at least some of the lubricant outlets (8) open into the tooth flanks (6) of the lubricating pinion (1) in the region of the pitch circle (d) and/or in a region between the pitch circle and the root circle.

## Revendications

1. Transmission comportant au moins une roue dentée (2) ou similaire, qui présente une denture en développante et comportant un dispositif de lubrification avec au moins un pignon de lubrification (1) pour fournir un lubrifiant transporté par exemple à travers une conduite de lubrifiant par une pompe de lubrifiant à partir d'un récipient de stockage, notamment de la graisse, sur au moins une roue dentée (2) ou similaire, dans laquelle le pignon de lubrification (1) présente une denture extérieure, dans laquelle débouche au moins un échappement de lubrifiant (8), dans laquelle le pignon de lubrification (1) du dispositif s'engrène avec au moins une roue dentée (2) et dans laquelle le pignon de lubrification présente une denture en développante, **caractérisée en ce que** les dents (7) de la denture extérieure du pignon de lubrification (1) présentent un profil de flanc de dent raccourci par rapport au profil théorique de la denture en développante du pignon de lubrification (1), dans laquelle la hauteur de tête (hk) et/ou la largeur des flancs de dent dans la direction circonférentielle sont diminuées dans une portion de flanc de dent placée radialement à l'extérieur du cercle primitif, de telle sorte que les dents du pignon de lubrification (1) pénètrent moins profondément dans la zone de pied de la roue dentée (2) à lubrifier.

2. Transmission selon la revendication 1, **caractérisée en ce que** les dents (7) de la denture extérieure du pignon de lubrification (1) présentent une hauteur de tête (hk) diminuée par rapport au profil théorique de la denture en développante du pignon de lubrification (1) d'environ 25% à environ 90%, notamment d'environ 50% à environ 80%.

3. Transmission selon la revendication 2, **caractérisée en ce que** les dents (7) de la denture extérieure du pignon de lubrification (1) présentent une hauteur de tête (hk) diminuée d'environ 75% par rapport au profil théorique de la denture en développante du pignon de lubrification (1).

4. Transmission selon une des revendications 1 à 3, **caractérisée en ce que** les dents (7) de la denture extérieure du pignon de lubrification (1) présentent un contour de tête de dent arrondi, notamment un contour de tête de dent arrondi avec trois rayons (r₁, r₂).

5. Transmission selon la revendication 4, **caractérisée en ce que** les dents de la denture extérieure du pignon de lubrification (1) présentent un contour de tête de dent arrondi, lequel possède un plus grand rayon (r₂) au niveau de la pointe de tête de dent, qui aboutit latéralement respectivement à des rayons (r₁) plus petits.

6. Transmission selon une des revendications 1 à 4, **caractérisée en ce que** les dents (7) de la denture extérieure du pignon de lubrification (1) présentent un contour de tête de dent arrondi de telle sorte que la largeur des flancs de dent dans la direction circonférentielle soit diminuée dans une portion de flanc de dent placée radialement à l'extérieur du cercle primitif par rapport à une denture en développante.

7. Transmission selon une des revendications 1 à 4 et 6, **caractérisée en ce que** les dents (7) de la denture extérieure du pignon de lubrification (1) présentent un contour de tête de dent en pointe.

8. Transmission selon une des revendications 1 à 4 et 6 à 7, **caractérisé en ce que** le pignon de lubrification (1) présente plusieurs conduites de lubrifiant (5) partant de la conduite d'alimentation en lubrifiant (4) disposée dans l_{'}axe dudit pignon (3) ou dans une zone proche de l'axe dudit pignon, lesquelles conduites débouchent respectivement dans au moins un échappement de lubrifiant (8) dans une des dents (7).

9. Transmission selon une des revendications 1 à 4 et 6 à 8, **caractérisée en ce que** au moins deux échappements de lubrifiant (8) débouchent dans chaque dent (7) du pignon de lubrification (1).

10. Transmission selon la revendication 9, **caractérisée en ce que** les échappements de lubrifiant (8) sont reliés par l'intermédiaire d'une rainure transversale ou d'un canal (9), qui s'étend dans la direction axiale du pignon de lubrification (1) sur presque la totalité de la largeur des flancs de dents (6).

11. Transmission selon les revendications 9 ou 10, **caractérisée en ce que** au moins un échappement de lubrifiant (8) débouche dans chaque flanc de dent (6) et/ou rainure transversale ou canal (9) du pignon de lubrification (1).

12. Transmission selon une des revendications 1 à 4 et 6 à 11, **caractérisée en ce que** au moins quelques-uns des échappements de lubrifiant (8) débouche au niveau du cercle primitif (d) et/ou dans une zone entre le cercle primitif et le cercle de pied dans les flancs de dent (6) du pignon de lubrification (1).
